# EUROPEAN PATENT APPLICATION

(11) **EP 2 015 199 A1**
(43) Date of publication of application: **14.01.2009**
(21) Application number: 07119547.3
(22) Date of filing: 29.10.2007
(51) Int. Cl.: G06F 17/30

(54) **System and method for federated member-based data integration and reporting**

(30) Priority: 06.07.2007 CA 2593233
(71) Applicant: Cognos Incorporated, Ottawa, Ontario K1G 4K9 (CA)
(72) Inventor: Senneville, Guillaume, Ottawa Ontario K1B 5G4 (CA); Peyton, Liam, Ottawa Ontario K1V 1M2 (CA)
(74) Representative: Hoeger, Stellrecht & Partner Patentanwälte

(57) **Abstract**

Method and system for integrating data between source data and a target application processing target data. A declarative data integration specification including a lineage information linking a source dimensional member of the source data and a target dimensional member of the target data is defined. A data movement specification using the data integration specification including the lineage information, a source reference to a source data model, a target reference to a target data model and a query specification for extracting source data for the target application is generated and the source data to the target application using the data movement specification is provided. A federated member-based metadata model including a source metadata model, a target metadata model, the lineage information mapping the source dimensional member and the target dimensional member; and a link connecting the source package layer and the target package layer, is also provided.

## Description

### FIELD OF THE INVENTION

The present invention relates to data integration, more specifically, the present invention relates to a system and method for managing and optimizing data integration between data sources and software applications.

### BACKGROUND OF THE INVENTION

Business decision making and business information needs have evolved over the past decades. At the same time, data architectures for large enterprises are becoming increasingly complex, especially in the area of reporting requirements for regulatory compliance and corporate performance management. New tools for processing the wealth of data and information have been deployed to exploit globally dispersed data sources that provide data for a wide spectrum of business purposes. Knowledge-based decision support systems have become highly specialized. In addition to relational databases, business managers and decision makers now look to the decision support systems and other advanced analytical applications for obtaining a competitive edge.

In a decision support system, the basic capabilities of querying and reporting functions is extended by On-line Analytical Processing (OLAP), allowing a robust multidimensional understanding of the data from a variety of perspectives. OLAP operations such as drill-down, roll-up and pivot provide insights into business growth, spending, and sales patterns that would simply not be possible otherwise. Other OLAP functionality includes operations for ranking, moving averages, growth rates, statistical analysis, and "what if" scenarios. This discovery process may be further automated in data mining applications, so that trends and patterns can be retrieved with minimal user input. The patterns, for example, may consist of subtle regularities that cross hierarchical and/or dimensional boundaries and, as such, would be less likely to be discovered otherwise.

Dimensions, as an essential and distinguishing concept in databases that support OLAP, are used for selecting and aggregating data at the desired level of detail. A dimension is organized into a hierarchy composed of numerous levels representing required details. A dimension thus is a structural attribute comprising a list of members.

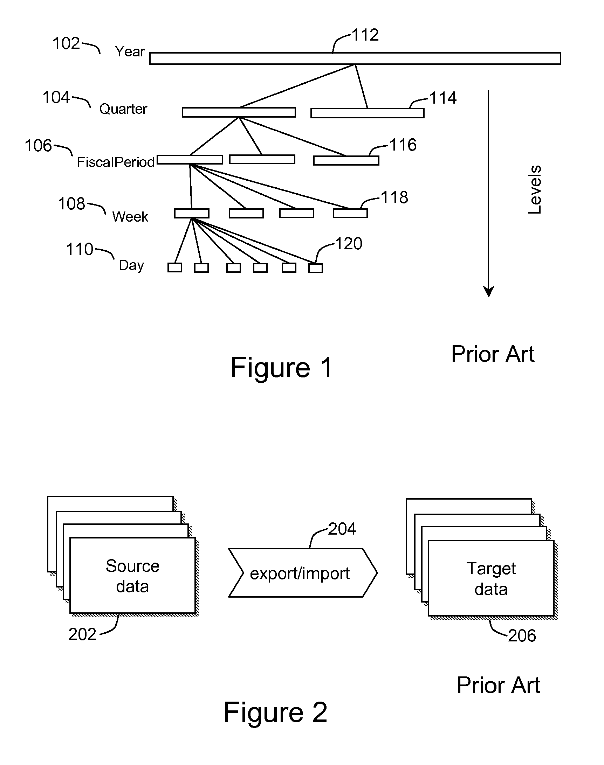

The members of each level are a similar type of data, share common properties and are arranged in levels. Referring to Figure 1, where an exemplary time hierarchy is shown, a plurality of member levels 102, 104, 106, 108, 110 is defined, and time periods 112, 114, 116, 118, 120 occur in the levels.

As shown in Figure 1, the members 112, 114, 116, 118, 120 form a tree. The members are not only characterized through the hierarchies in the tree, they are also characterized by the levels in which they reside. For example time periods of a time level have common properties.

A method for naming a member in a multidimensional database based on the context of the member in the dimension hierarchy is described in US application 11/553,771 "System and Method for Naming Dimension Members in a Date Analyzing System", filed on October 27, 2006, which is hereby incorporated by reference in its entirety.

Various data analyzing applications are available to assist business decision makers to examine their business data. Using a data analyzing application, business decision makers can navigate through data organized in a multidimensional database, relevant to their business.

Furthermore, corporate performance management (CPM) applications have emerged as a new strategic tool for companies to leverage and augment their existing data assets. These new applications (e.g. Cognos Enterprise Planning) are typically external to the existing ones that are geared toward operations management (e.g. SAP). That alone increases the burden and stress on traditional data integration techniques. CPM applications not only permit analysis from existing data but are also data manipulation tools where users contribute new data, calculations, consolidations, aggregations, plans, etc. That adds a new dimension to the data integration problem: these target applications also become the data sources for other CPM applications and can even feedback to traditional operational systems. That creates a data integration cycle that requires workflow capabilities.

These data analyzing and corporate performance management applications need to be integrated, synthesized and synchronized into a consistent version of the truth, sometimes known as "single version of the truth", in order to present a consolidated data view of business operations.

Referring to Figure 2, the current state of technology requires technical experts in data storage, data movement, and data reporting technologies to manually define complex processing of the data. The data integration typically takes place by export from data source 202, and import 204 into target applications 206. The data integration generally provides a mechanism for copying data in batch into target data 206 as either a system-scheduled, or IT-focused task. The data integration may include copying and transforming metadata such as hierarchies, currencies, time dimensions, and measures. However, the technical experts often lack an understanding of the relevant business processes and government regulations, and resulting in errors, broken processes. Business users on the other hand lack the technical understanding to perform the data integration tasks. This results in a great deal of manual effort and difficult communication between business users and technical experts.

The import process is sometimes known as extract, transform, and load (ETL) and have been described in the art.

In one method, a user specifies source data, optional transformations and defines a destination database, as well as its location. The user specification creates a package. A package defines the steps of associated tasks, with each step optionally having one or more precedence constraints. Execution of the package causes a data pump to import the user-specified data, conform the data in accordance with the user's definition of the destination database and export the data to that database. Processing occurs on a streaming, contiguous basis. As each row is pulled from source database into data pump, the user-defined transform is applied and data lineage information is bound to the physical data.

In another method information is delivered within a computing environment by extracting information from an information source and transforming the extracted information. The transformed information is isolated by wrapping the transformed information into a message envelope having a standard format. The message envelope is routed to an information target, unwrapped to reveal the received information, possibly transformed again, and loaded into the information target. The extraction, transformation, and adaptation steps on the source side are isolated from the routing step such that the extraction, transformation, and adaptation steps on the source side may be executed simultaneously for a plurality of information sources distributed across the computing environment to produce a plurality of message envelopes. The routing, unwrapping, mapping, transformation, and loading steps on the target side are repeated for each of the plurality of message envelopes.

In yet another method data from among many remote data sites is integrated, by producing a data extraction routine at each remote site to perform an initial step of extracting data from a source database at the remote. The data that is produced is stored in a data storage facility at the remote. A backup operation is then performed, to migrate the data that is produced from the remote to a collection site. Similar processing occurs at each of the remote sites. The collection site receives the data from the remote sites as mirrored data. Subsequent processing of the mirrored data is then performed to integrate the data received from the remotes into a collection. The subsequent processing includes a transformation operation followed by a loading operation.

However, there are problems associated with the prior art processes. The data is simply copied and moved from the source location to the target location, such as target applications. There is no drill-through relationship maintained between the two locations and data sharing is difficult to implement. Data lineage indicating where the data in the target applications originate from, which business users are responsible for the data, and when and what version of the source data was imported, is not supported.

In prior art processes, data are often transformed in the process through manual queries, combination, filtering, recalculation so that the principal of "single version of the truth" is difficult to implement and often violated. There is no audit trail of the transformations performed in integrating data from a source being maintained and documented. Data can look different depending on the application they appear in, especially since it is a copy of data that may be out of sync with the source.

Furthermore, the prior art processes are labor intensive, IT-focused. A business solution may be articulated on paper, but there is no business-oriented interface in which to define and manage the solution and generally no data integration system to support such a business oriented interface. The business solution is translated to a separate IT issue divorced from the business application where meaning can be lost in.

Tools are available for the target application for importing data into the respective target applications. One exemplary tool integrates data sources into a single source cube which can be used for target applications. Reporting can be performed on the single source cube. However, distributed or federated reporting and data integration are not supported.

Other tools may overlap significantly but have little consistency between them. Each of the tools may have particular import mechanism specific to an application.

There is therefore a need for a mechanism for business decision makers and analysts who require data from different data sources for applications such as enterprise planning, consolidation, scorecarding, or performance management to define the data they are integrating with ease, by defining complex integrations using tools and concepts they are already familiar with: for example, business tools for querying, reporting, or dimension-member editing.

There is a further need to provide a definition to support large volumes and complex data movement and data integration, a definition that is precise, generated by the business user and may be administered and refined by an IT professional.

There is a further need to generate member-based models that support analysis and reporting across target applications and source data, especially after transformation of the source data in the target application

There is a further need to reuse and leverage common patterns of data integration for specific applications.

### SUMMARY OF THE INVENTION

It is an object of the invention to provide an improved system and method for federated member-based specifications and data integration.

The invention according to an aspect of the invention provides a method for integrating data between source data and a target application processing target data, the method comprising the steps of: defining a data integration specification, the data integration specification including a lineage information linking a source dimensional member of the source data and a target dimensional member of the target data; generating a data movement specification using the data integration specification, the data movement specification including the lineage information, a source reference to a source data model, a target reference to a target data model and a query specification for extracting source data for the target application; and providing the source data to the target application using the data movement specification.

Preferably, the lineage information is part of a federated member-based metadata model. The federated member-based metadata model includes the source metadata model having a source data access layer including a source data access layer model objects, a source business layer including source business layer model objects; and a source package layer including source package layer model objects; and the target metadata model having a target data access layer including a target data access layer model objects, a target business layer including target business layer model objects; and a target package layer including target package layer model objects;

Preferably, the method comprises the further steps of: defining a link connecting the source package layer and the target package layer; and providing a mapping between the source dimensional member and the target dimensional member in the lineage information.

Preferably, the method comprises the further step of defining new data models for a new application.

Preferably, the method comprises the further of selecting an existing target application.

Preferably, the method comprises the further steps of selecting the source dimensional member in a user interface for moving to an existing data structure, and mapping the selected source dimensional member to the existing data structure.

Preferably, the mapping is selected from the group consisting of position based mapping, identification key based mapping and name and description based mapping.

Preferably, the method comprises the further steps of selecting a branch of a source dimensional member tree in a user interface for moving to an existing data structure, and mapping the selected branch to the existing data structure.

Preferably, the mapping is selected from the group consisting of position based mapping, identification key based mapping and name and description based mapping.

Preferably, the method comprises the further step of refreshing the member attributes of the source data.

Preferably, the method comprises the further step of refreshing the values of the source data.

Preferably, the method comprises the further the step of defining a new report for mapping source data member and measure to the target application.

Preferably, the method comprises the further step of defining a new report in the data integration module that is used to map members and measures to the target application.

Preferably, the method comprises the further step of defining a new report in the target application.

Preferably, the method comprises the further step of storing a metadata member in a system metadata registry, the metadata member being selected from the group consisting of the source metadata model, the target metadata model, the lineage information, the data integration specification, and a combination thereof.

Preferably, the method comprises the further step of providing the source data further comprises the steps of invoking a data movement engine based on the data movement specification; and translating the source dimensional member into target dimensional member.

Preferably, the method comprises the further step of providing the source data further comprises the step of moving values specified by an intersection of a source measure and a source member.

Preferably, the values are specified in a report referenced by the data integration specification.

Preferably, the method comprises the further step of transforming the source data to align with the target data.

Preferably, the source data comprising a plurality of data sources, and wherein the lineage information includes a plurality of mappings between the members of the plurality of data sources and the target data. Preferably, the method comprises the further

Preferably, the lineage information is bidirectional, and adapted for drill-through from target data to source data.

Preferably, the data integration specification is an XML document.

Preferably, the data movement specification is an XML document.

Preferably, the data integration specification further comprises a query specification specifying data being integrated from the source data, and a transformation for integrating the data into the target data.

Preferably, the data integration specification further comprises a timing specification specifying a timing for integrating data from the source data into the target data, the timing being selected from a group consisting of a single occurrence, scheduled at regular intervals, and on demand.

Preferably, the method comprises the further step of the step of incorporating the timing information into the data movement specification for executing by a data movement engine.

In accordance with another aspect of the present invention, there is provided a system for integrating data between a source data to a target data, the system comprising: a data integration module defining a data integration specification, the data integration specification including a lineage information linking a source dimensional member of the source data and a target dimensional member of the target data; a data movement specification generator generating a data movement specification using the data integration specification, the data movement specification including the lineage information, a source reference to a source data model, a target reference to a target data model and a query specification for extracting source data for the target application; and a data movement service providing the source data to the target application using the data movement specification.

Preferably, the system further comprises a federated member-based metadata model, the federated member-based metadata model including: the source metadata model having a source data access layer including a source data access layer model objects, a source business layer including source business layer model objects; and a source package layer including source package layer model objects; the target metadata model having a target data access layer including a target data access layer model objects, a target business layer including target business layer model objects; and a target package layer including target package layer model objects; the lineage information mapping the source dimensional member and the target dimensional member; and a link connecting the source package layer and the target package layer.

Preferably, the system further comprises a system metadata registry including a metadata member selected from the group consisting of the source metadata model, the target metadata model, the lineage information, the data integration specification, and a combination thereof.

Preferably, the system further comprises a user interface for presenting the source data, the target application, the user interface being further adapted for moving the source dimensional member to an existing data structure in the target application, and for mapping the source dimensional member to the existing data structure.

Preferably, the system further comprises a data movement engine for translating the source dimensional member into target dimensional member.

Preferably, the system further comprises a system metadata registry for storing the data integration specification.

Preferably, the system further comprises an existing application processing the source data, the existing application being selected from a group consisting of a reporting application, a planning application, a consolidation application, a customer relation management application, and a web service compatible application.

Preferably, the target application is selected from a group consisting of an enterprise planning, a consolidation, a score carding and a performance management application.

Preferably, the system further comprises a reporting application with a reporting engine, the reporting engine using the federated member-based metadata model for reporting against the target application.

Preferably, the reporting application further comprises queries and reports linked to the source data and target application through the federated member-based metadata model.

Preferably, the system further comprises a data movement engine processing the data movement specification; and translating the source dimensional member into target dimensional member.

Preferably, the lineage information is bidirectional, and adapted for drill-through from target data to source data.

Preferably, the data integration specification is an XML document.

Preferably, the data movement specification is an XML document.

Preferably, the data integration specification further comprises a query specification specifying data being integrated from the source data, and a transformation for integrating the data into the target data.

Preferably, the system further comprises a master data management for managing master copies of dimensions, hierarchies, levels, members and random attributes and data mappings.

Preferably, the system further comprises a workflow system for refreshing member and data values from the source data; and for notifying of specific events.

Preferably, the data integration specification further comprises a timing specification specifying a timing for integrating data from the source data into the target data, the timing being selected from a group consisting of a single occurrence, scheduled at regular intervals, and on demand.

Preferably, the timing information is incorporated into the data movement specification for executing by the data movement engine controlled by the workflow system.

In accordance with another aspect of the present invention there is provided a storage medium readable by a computer encoding a computer program for execution by the computer to carry out a method for integrating data between a source data and a target application processing target data, the computer program comprising: code means for defining a data integration specification, the data integration specification including a lineage information linking a source dimensional member of the source data and a target dimensional member of the target data; code means for generating a data movement specification using the data integration specification, the data movement specification including the lineage information, a source reference to a source data model, a target reference to a target data model and a query specification for extracting source data for the target application; and code means for providing the source data to the target application using the data movement specification.

Preferably, the lineage information is part of a federated member-based metadata model, the federated member-based metadata model including: the source metadata model having a source data access layer including a source data access layer model objects, a source business layer including source business layer model objects; and a source package layer including source package layer model objects; and the target metadata model having a target data access layer including a target data access layer model objects, a target business layer including target business layer model objects; and a target package layer including target package layer model objects.

Preferably, the computer program further comprises: code means for defining a link connecting the source package layer and the target package layer; and code means for providing a mapping between the source dimensional member and the target dimensional member in the lineage information.

This summary of the invention does not necessarily describe all features of the invention.

### BRIEF DESCRIPTION OF THE DRAWINGS

These and other features of the invention will become more apparent from the following description in which reference is made to the appended drawings wherein:

Figure 1 depicts a dimensional hierarchy showing levels and members;

Figure 2 is schematic illustrating the copying data in batch into target data;

Figure 3 shows a metadata model and the transformation for the layers of the metadata model;

Figures 4 (a) and (b) illustrate embodiments of the present invention for integrating data using federated member-based metadata model;

Figure 5 illustrates the member based mapping from the source data to the target data;

Figure 6 shows a member in a hierarchy identified by a member ID;

Figure 7 illustrates a system in accordance with another embodiment of the present invention;

Figure 8 illustrates a system in accordance with yet another embodiment of the present invention;

Figure 9 (a) shows an exemplary data integration specification in relation to data sources and other specifications;

Figure 9 (b) depicts an exemplary data integration specification in accordance with one embodiment of the present invention;

Figure 9 (c) depicts an exemplary data integration specification in relation to data sources and other specifications;

Figure 10 depicts an exemplary data movement specification;

Figures 11 (a), (b), (c) and (d) show schematic interfaces for the data integration module; and

Figure 12 describes steps of a method for federated member-based specifications and data movement in accordance with an embodiment of the present invention.

### DETAILED DESCRIPTION OF PREFERRED EMBODIMENTS

Reference will now be made in detail to some specific embodiments of the invention including the best modes contemplated by the inventors for carrying out the invention. Examples of these specific embodiments are illustrated in the accompanying drawings. While the invention is described in conjunction with these specific embodiments, it will be understood that it is not intended to limit the invention to the described embodiments. On the contrary, it is intended to cover alternatives, modifications, and equivalents as may be included within the spirit and scope of the invention as defined by the appended claims. In the following description, numerous specific details are set forth in order to provide a thorough understanding of the present invention. The present invention may be practiced without some or all of these specific details. In other instances, well-known process operations have not been described in detail in order not to unnecessarily obscure the present invention.

In this specification and the appended claims, the singular forms "a," "an," and "the" include plural references unless the context clearly dictates otherwise. Unless defined otherwise, all technical and scientific terms used herein have the same meaning as commonly understood to one of ordinary skill in the art to which this invention belongs.

The term "ancestor" is intended to describe a dimension member at any level above a particular member in a hierarchy. The value for an ancestor is the aggregated total of the values for its descendants. In the inheritance hierarchy of OLAP, an ancestor may also be an object that is two or more levels above a derived object.

The term "argument" is intended to describe a keyword, constant, or object name that provides input to a command, function, method, or program. An argument indicates the data values on which the command, function, method, or program operates; or specifies the operation of the command, function, method, or program.

The term "array" is intended to describe a group of data cells that are arranged by the dimensions of the data. A spreadsheet may be considered as a two-dimensional array in which the cells are arranged in rows and columns, with one dimension forming the rows and the other dimension forming the columns. Similarly, a three-dimensional array may be visualized as a cube with each dimension forming one edge of the cube.

An "attribute" is a descriptive characteristic of the elements of a dimension. Attributes represent logical groupings that allow users to select data based on like characteristics. For example, users might choose products using a Color attribute to select all the products whose Color attribute has a value of "green".

The term "cell" is intended to describe a data value identified by one value from each of the dimensions.

The term "child" is intended to describe a dimension member at the level immediately below a particular member in a hierarchy. Values for children are included in the calculation that produces the aggregated total for a parent. The dimension member may be a child for more than one parent if the dimension has more than one hierarchy. In the inheritance hierarchy of OLAP, a child may also be an object derived from another object.

The term "cube" is intended to describe a logical organization of multidimensional data. The edges of a cube typically contain dimension values, and the body of a cube includes measure values.

The term "data" is intended to include bits and bytes interpreted by humans to be values according to some scale of measure.

The term "data space" is intended to describe a space into which the data items can be mapped. In general, a number of bodies of data can be mapped into the same data space.

The term "data source" is intended to describe an organization of data in structures that support an API that can be used to access and create data via query. Data source can be queried both for data and for metadata, which metadata includes the structure and description of the data.

The term "data store" is intended to include a persistent storage of data in structures that support an API that can be used to insert, update and restructure data. A data store can be queried both for data and for metadata.

The term "descendant" is intended to describe a dimension member at any level below a particular member in a hierarchy. Values for descendants are included in the calculation that produces the aggregated total for an ancestor. In the inheritance hierarchy of OLAP, descendants may also be an object of two or more levels below another object, the ancestor.

The term "hierarchy" is intended to describe a directed tree, rooted in a dimension, whose nodes are all the dimension attributes that describe that dimension, and whose arcs model many-to-one associations between pairs of dimension attributes. A hierarchy is a logical structure that uses ordered levels as a means of organizing and structuring dimension elements in parent-child relationships, with each level representing the aggregated total of the data from the level below.

The term "member" is intended to describe a data item that's a focus of interest for the decision-making process.

The term "measure" is intended to describe a fact that typically models a set of events occurring in the enterprise world. The term "member" may also be used to represent "measure" in the context of "member-based mapping" since measures will be exposed to business users as they are known business concepts rather than technical ones. A measure can be based on simple or complex expressions that are usually predefined by IT professionals and made available to business users. A set of members from different dimensions intersect with measures and become the coordinates for data values stored in the dimensional data structures.

The term "metadata" is intended to describe data organization and data utilization, including type; structures such as query subjects, dimensions, hierarchies, levels, attributes; validation rules; and policies. Metadata may include descriptions of the members of dimensions. Metadata description may exist on its own, independent of any data source or data store, however, metadata usually exists as a mechanism for querying data in a data source or inserting, updating and restructuring data in a data store.

The term "metadata model" or "model" is intended to be used for a complete, consistent description of either a real or virtual data source or data store. A metadata model may be considered as a source of metadata, or metadata source.

The term "metadata registry" is intended to describe a directory or catalog of metadata elements and their sources indicating where and how they can be accessed. A metadata registry includes identification of the location and connection information for source and target data from which source and target metadata may be retrieved. A metadata registry may include the location of models, data integration specifications and data movement specifications.

The term "metadata repository" is intended to describe the storage of metadata elements. A metadata repository may be a single data source (i.e. a database, with a description of all its metadata elements) or even a single federated member-based metadata model. The metadata repository may also be a metadata registry that also stores the metadata elements the metadata registry is cataloging (e.g. a metadata repository of all models, data integration specifications, and data movement specifications, as well as a directory of the connection information to all source and target data stores).

The term "master data" is intended to include the data used to define the members of dimensions that are shared or reused across systems, for example, lists or hierarchies of customers, suppliers, accounts, or organizational units. More specifically, master data is considered as the "single version of the truth" as far as company data assets are concerned. Master data may have both data that is maintained in a data store, as well as metadata that describes the organization and utilization of the data, both the data and metadata need to be shared and reused.

The term "master data management" (MDM) is intended to describe the life cycle management of creation, updating, archiving and propagation, across systems that share or reuse the master data. Versioning, data movement, synchronization, data transformation, data lineage, impact analysis and integrated reporting across data sources are services associated with master data management.

The term "package" is intended to describe a unit of organization for data sources, data stores, and metadata models defining a business application, optionally in the context of a specific set of software tools and business processes.

The term "query" is intended to describe a specification for a particular set of data, the particular set of data is referred to as the query's result set. The specification may include intrinsic manipulation such as selecting, aggregating, calculating, or otherwise manipulating data.

The term "report" is intended to included an object that returns data organized into structures when it is executed. A report may be considered as a type of data source, an analysis tool that is used to view, manipulate, and print data. For example, a tabular presentation of multidimensional data is a report.

The term "report specification" is intended to describe data organization in a report. A report specification may be considered as a type of metadata model.

A database management system (DBMS) is a software system providing data independence, i.e., user requests are made at a logical level without any need for knowledge as to how the data is stored in actual files in the physical database. Data independence implies that the internal file structure could be modified without any change to the users' perception of the database. To achieve this data independence, it has been proposed to use three levels of database abstraction. The lowest level in the database abstraction is the internal level 1. In the internal level 1, the database is viewed as a collection of files organized according to an internal data organization. The middle level in the database abstraction is the conceptual level 2. In the conceptual level 2, the database is viewed at an abstract level. The user of the conceptual level 2 is thus shielded from the internal storage details of the database viewed at the internal level 1. The highest level in the database abstraction is the external level 3. In the external level 3, each group of users has their own perception or view of the database. Each view is derived from the conceptual level 2 and is designed to meet the needs of a particular group of users. To ensure privacy and security of data, each group of users only has access to the data specified by its particular view for the group.

In business intelligence and corporate performance management systems, a metadata model may be used to provide a common set of business-oriented abstractions of the underlying data sources.

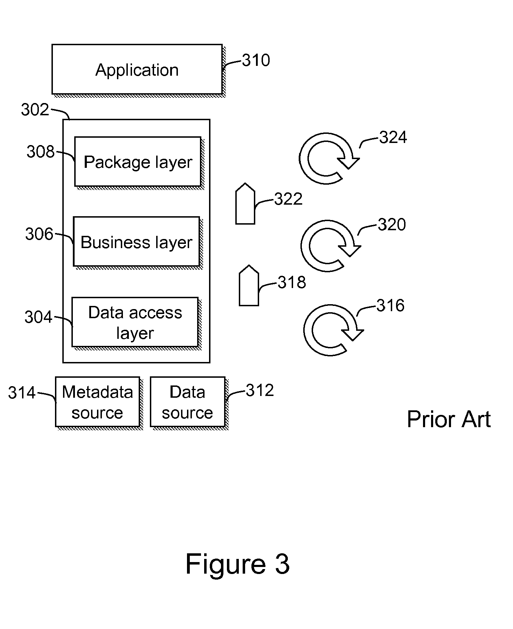

Referring to Figure 3, the metadata model 302 defines the objects that are needed to support client applications 310. The metadata model 302 provides three layers, corresponding to the three levels of abstractions of the data sources. The three layers are a physical layer or data access layer 304, a business layer 306 and a presentation layer or package layer 308. In a typical business intelligence system, a business intelligence application 310 is conceptually provided on top of a metadata model, and underneath of the metadata model is a data source 312 or a metadata source 314. A data source 312 may be one or more database or other data sources.

The model objects contained in a higher abstraction layer may include objects which are constructed from a lower abstraction layer to the higher abstraction layer.

The data access layer 304 includes metadata that describes how to retrieve physical data from data sources 312. The data access layer 304 is used to formulate and refine queries against the underlying data sources 312. The underlying data sources 312 may be a single or multiple data sources.

The data access layer 304 may include a part of the model objects that directly describe actual physical data in the data sources 312 and their relationships. These model objects may be called data access model objects. The data access model objects may include, but not limited to, databases, catalogues, schemas, tables, files, columns, data access keys, indexes, data access joins, views, function stored procedures and synonyms.

The data access model objects in the data access layer 304 are metadata, which are created as a result of importing metadata from data sources and metadata sources 312 provided by users. Examples of metadata sources include databases, cubes, files and reports. The information of some data access objects may be available from the underlying data sources 312.

The data access layer 304 may allow users to define data source queries, such as SQL queries. Data source queries return a result set of physical data from underlying data sources 312.

The business layer 306 describes the business view of the physical data in the underlying data sources 312. It is used to provide business abstractions of the physical data with which a query engine can formulate queries against the underlying data sources 312.

The business layer 306 may include business model objects that can be used to define in abstract terms the user's business entities and their interrelationships. The business model objects are reusable objects that represent the concepts and structure of the business to be used in business intelligence environments. The business model objects represent a single business model, although they can be related to physical data in a number of different data sources 312.

The business model objects include a business model, business rules and display rules. The business model may include entities, attributes, keys and joins. The business rules may include calculations, filters and prompts. The display rules may include elements, styles and enumeration values.

The business model objects are closely related to the data access model objects in the data access layer 304. For example, entities in the business layer 306 are related to tables in the data access layer 304 indirectly; and attributes in the business layer 306 correspond to columns in the data access layer 304. In the simplest case, all the attributes of an entity in the business layer 306 may be related one-to-one to the columns of a single table in the data access layer 304. However, the relationship is not always a one-to-one relationship. In the business layer 306, entities may be related to other entities by joins. An entity may further inherit information from another entity by using subtyping.

The information of the objects of the business model in the business layer 306 is not generally available in underlying data sources 312. Conversely, information available in metadata sources 314 is generally associated with the data access layer 304, rather than with the business layer 306.

The package layer 308 includes package model objects that describe subsets of the business layer 306. The package model objects are used to provide an organized view of the information in the business layer 306. The information is organized in terms of business subject areas or by way in which it is used.

The package model objects in the package layer 308 include presentation folders and/or subjects. Each subject in the package layer 308 includes references to a subset of the business model objects that are interested in a particular group or class of users. The subset of the business model objects are reorganized so that they can be presented to the group of users in a way suitable to the group of users. Also, a user can combine references to the business model objects available from the business layer 306 into combinations that are frequently used in the user's business. user defined folders that contain these combinations of references are called user folders or presentation folders.

Presentation folders and subjects contain references to objects in the business layer 306, including entities, attributes, filters and prompts. Presentation folders create packages of information for the end user. Each package is defined for a specific purpose, e.g., one or more business intelligence applications. Designers can combine them, by functions of subjects or by group of users, in order to organize business model objects into collections of most frequently used objects, or in order to support various business intelligence applications.

Transformations are used to complete the metadata model 302. For example, when a database is introduced, metadata is imported from the metadata source 314 into the metadata model 302. Metadata may also be imported from one or more metadata repositories or other data sources. However, if such metadata does not have proper mapping to the metadata model 302, then the transformations can be used to provide the missing pieces to complete the metadata model 302.

The transformations may include a plurality of different transformations. In the simplest scenario, as shown in Figure 3, the transformations 316, 318, 320, 322, and 324 are sequential. Each of which is constructed to suit the requirements.

The metadata model 302 has the three layers: data access layer 304, business layer 306 and package layer 308, as described above. The transformations also has three types: data access (physical) model transformations 316, business model transformations 318 320, package model transformations 322 324. The transformations transform metadata from the lower abstraction level to the higher abstraction level.

The data access layer objects built in the data access layer 304 in the metadata model 302 represent a solid picture of what exists in the data source 312. However, these imported data access layer objects are inadequate to interact with application 310, i.e., the metadata model 302 is incomplete with only those imported data access layer objects and cannot be used to build reports. That is, the imported data access layer objects may not be enough to form a complete business layer 306. In order to improve the data access layer 304, the data access model transformations 316 take the data access layer objects that exist in the data access layer 304, and make changes to them and/or add new objects to complete the data access layer 304.

Then, the business model transformations 318 take the data access layer objects from the data access layer 304 and build their corresponding business layer objects in the business layer 306. However, these business layer objects that are transformed from the data access layer 304 are often inadequate to provide reports to users. In order to improve the business layer 306, the business model transformations 320 take the business layer objects that exist in the business layer 306, and make changes to apply some business intelligence to them.

The package model transformations 322 take the business layer objects from the business layer 306 and build their corresponding package layer objects in the package layer 308. Then, the package model transformations 324 prepare the package layer objects suitable for corresponding client applications. The package model transformations 324 take the package layer objects that exist in the package layer 308, and make changes to them to complete the package layer 308. The package layer objects in the package layer 308 may then be used to build reports to users by the client applications.

Thus, by the transformations 316, 318, 320, 322, 324, a physical database design is converted into a logical database design, i.e., the transformations deduce what the logical intent of the model was.

Each of the transformations 316, 318, 320, 322, 324 records in the metadata model 302 information about changes made during execution of the transformations to avoid repeating the same activity in subsequent executions.

Details of the metadata models and the transformations are described in US Patent 6,609,123 to H. Cazemier and G.D. Rasmussen, issued on August 3, 2003, which is incorporated herein by reference in its entirety.

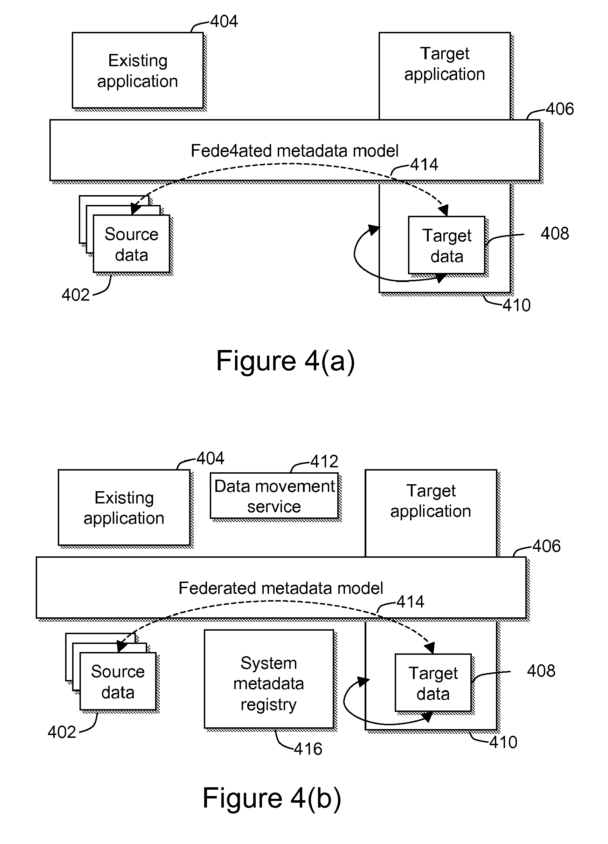

Figure 4 (a) illustrates an embodiment of the present invention for integrating different source data 402, which are used by an existing application 404, through a federated member-based metadata model 406 to target data 408 processed by a target application 410. A federated member-based metadata model is a model that defines the structure and relationships of data that is stored in a plurality of data stores in such a way that one can access the data as if it came from a single data store. A federated member-based metadata model defines relationships between data models in order to enable cross-referencing between different data stores (virtual or physical) that can be used to define data movement from one data store to another, or drill through from one data store to another so that one can navigate and browse from one data store to another. Typically, the basis for federated member-based metadata models is to specify joins based on member-based mapping between shared or similar dimensions. The existing application 404 may be a reporting application, a planning application, a consolidation application, a customer relation management application, a web service compatible application, or any applications using or processing the source data 402. The target application may be any application processing the target data, in any possible transformed form of the source data 402. The target application may be, for example, but not limited to, an enterprise planning, a consolidation, a score carding or a performance management application. The source data 402 and target data 408 are mapped based on the dimensional member information. This member-to-to-member mapping results in lineage information 414 linking a source dimensional member of the source data 402 and a target dimensional member of the target data 408. Referring to Figure 4(b), the data movement service 412 moves data from data source 402 to target 408, the data source and target are registered in a system metadata registry 416 that is uses by the data movement service 412 in order to access and move the data.

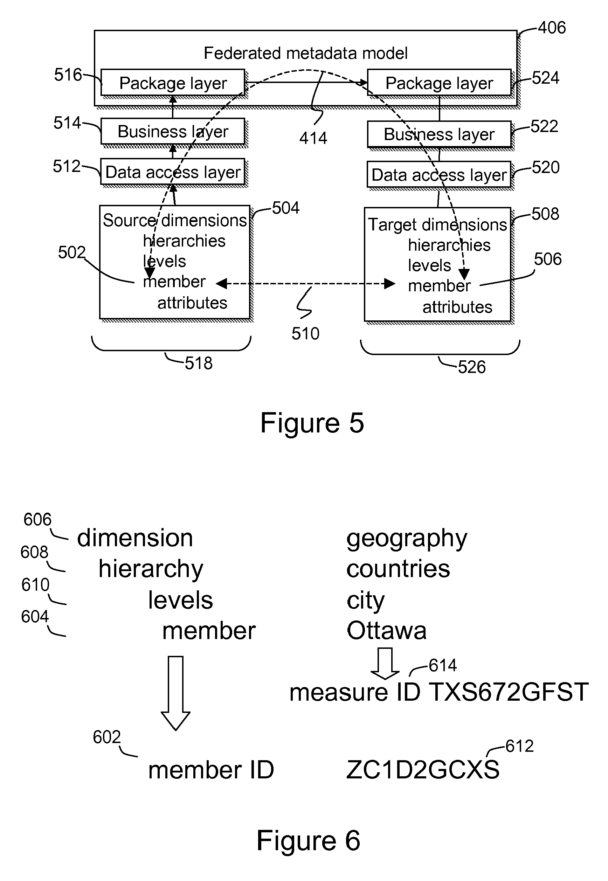

Figure 5 illustrates the member based mapping from the source data to the target data. The metadata describing a source dimension member 502 of source dimension 504, and target dimension member 506 of target dimensions 508 may include, but not limited to, a data model, and a dimension including hierarchies, levels, attributes. In accordance with one embodiment of the present invention, the mapping from the source data to target data is based on member-to-to-member mapping 510. The lineage information 414 describes the mapping from the dimension member 502 to target dimension member 506 and includes the full metadata describing the members rather than simply their IDs. The lineage information 414 may be stored in system metadata registry 416, and includes the metadata in the data access layer 512, business layer 514 and package layer 516 on the source data side 518, and in the data access layer 520, business layer 522 and package layer 524 on the target data side 526, as well as the transformations needed to use the data sources 402 in the target application 410. It should be apparent to a person skilled in the art, that because the metadata registry is a directory or catalog of metadata elements and their sources indicating where and how they can be accessed, and identifies the location and connection information for source and target data from which source and target metadata may be retrieved, the system metadata registry 416 may also be a metadata repository, which generally stores metadata elements.

The source metadata model includes the data access layer 512, the business layer 514 and the package layer 516 . The target metadata model includes the data access layer 520, the business layer 522 and the package layer 524. The member-to-to-member mapping and the lineage information 414 may be bidirectional, therefore, the lineage information 414 may be used for the movement of data from data source 402 to the target application 410, for integrated reporting, as well as for drill-through across both target applications 410 and data source 402. As illustrated in Figure 5, the lineage information 414 is linked at the package layer 308 from the source data model to the target data model, thus forming part of the federated member-based metadata model 406. Using the federated member-based metadata model 406 the source data 402 may be moved into the target data 408 for use by a target application 410. The source data 402 may be used and/or created by any number of possibilities, for example but not limited to, any external data source, any internal data source, data source used or created by the existing application 404 or target application 408. The source data 402 is shared to the target application 410 through the federated member-based metadata model 406. When the source data 402 is updated, the data used by the target application is updated through the federated member-based metadata model 406.

A member may be uniquely identified by a member ID 602. As illustrated in Figure 6, a member "Ottawa" 604 which is uniquely identified by the source model X, dimension "geography" 606, hierarchy "countries" 608, at the level "city" 610. The member ID may be any text string 612. The measure of a member may also be uniquely identified by a measure ID 614.

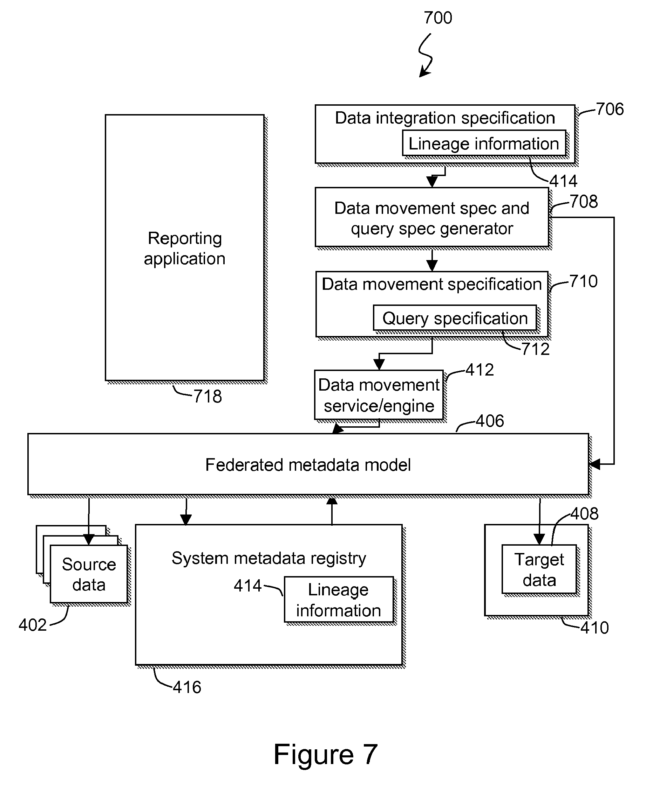

Referring to Figure 7, in accordance with another embodiment of the present invention, a system 700 that allows business users to define and manage data integration relationships between disparate and federated data sources 402 for use in target applications 410 such as enterprise planning, consolidation, score carding and performance management is described. The system 700 includes a data integration specification 706, a data movement specification and query specification generator 708 for generating data movement specification 710 and query specification 712. The source data is moved into a target application 410 as target data 408 by the data movement service/engine 412 based on the data movement specification 710. As illustrated in Figure 7, an exemplary reporting application 718 is included to run and define queries.

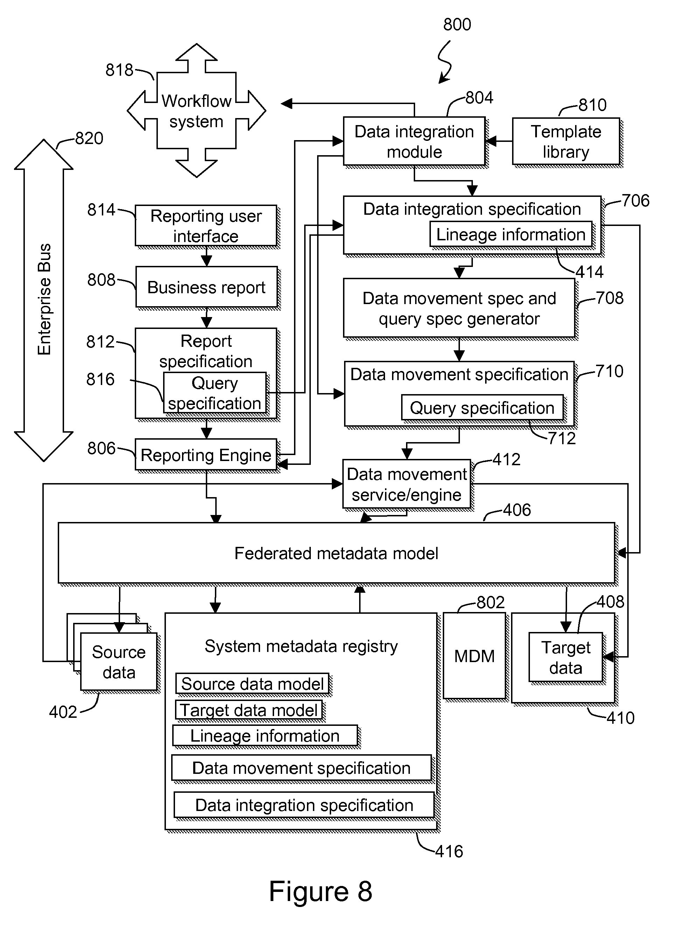

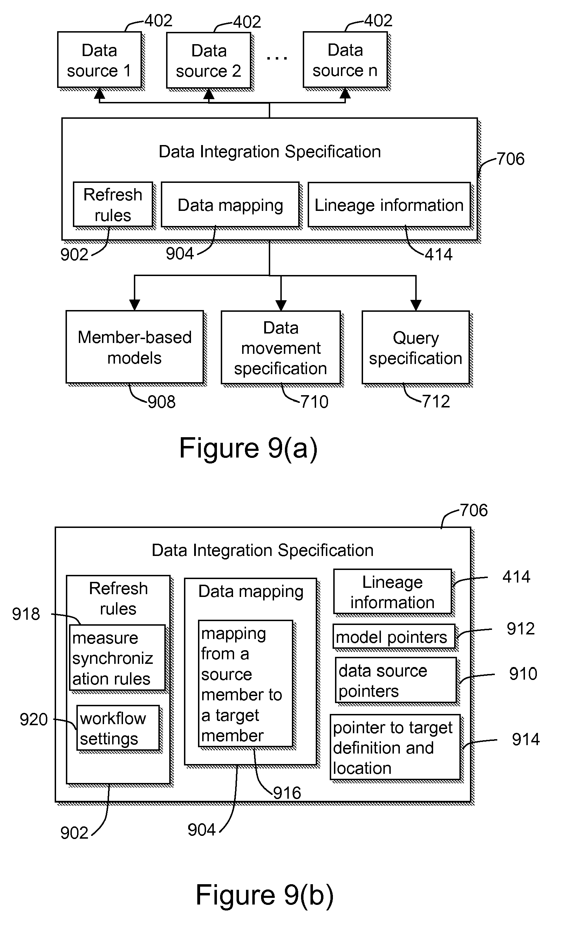

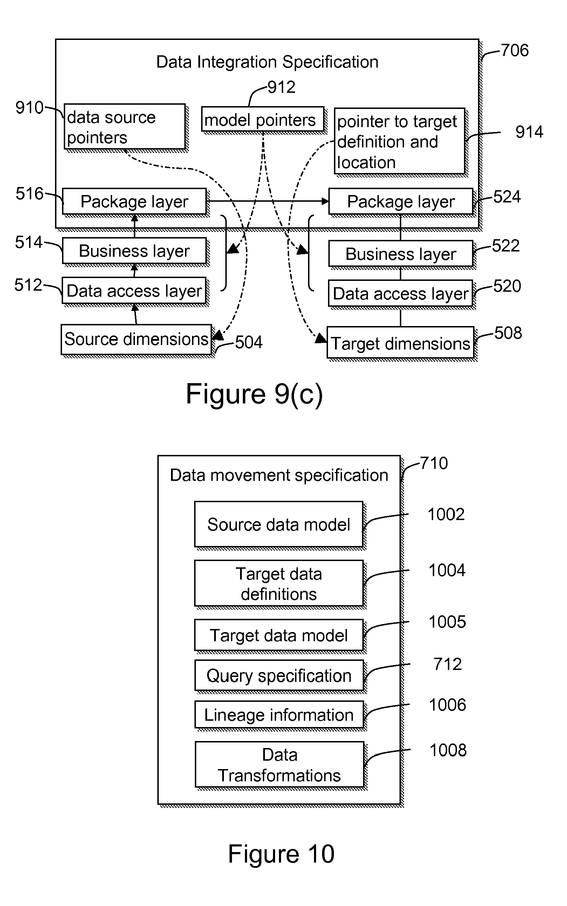

Figure 8 shows further details of an exemplary reporting application 718 as illustrated in Figure 7. A data integration specification 706 is constructed by the data integration module 804 and its lineage information will be used to increment the federated member-based data model. Also referring to Figure 9, the data integration specification 706, for example, in the form of an XML specification described by an XML schema, defines the integration of data from disparate data sources 402 in terms of business queries that create member-based data models. The data integration specification 706 includes specification for data refresh rules 902. The specification for data refresh rules 902 specifies how the target data 408 is updated, for example, when there is a change in the source data, or on a schedule. This is in collaboration with work flow 818 which will be used to notify user of progress, exception conditions and trigger tasks automatically as predefined in workflow settings. The data integration specification 706 further includes data mapping 904 as well as lineage information 414 to support federated reporting across target applications, which target applications use the data integration specification 706 and the data sources 402 referenced by the data integration specification. From the data integration specification 706, appropriate member-based models 908, query specification 712, and data movement specification 710 can be derived from the data integration specification 706 to support integrating data into target applications and supporting reporting and drill-through across both target applications and data sources.

Referring to Figure 9(b) the data integration specification 706 can be used to store any business user selection made available in the data integration module 804. Examples further include, but are not limited to: data source pointers 910; model pointers 912; pointer to target definition and location 914; members selected; mappings from a source member to a target member 916, for example, through a source member ID to a target member ID; mappings from a source measure to a target measure, for example, through a source measure ID to a target measure ID; mapping type: for example, parent or same; business data filters added by the user; business expressions added by the users; scoping information specifying which measures apply to which members; algorithm used to auto-map; synchronization rules 918 and workflow settings.

Referring to Figure 9(c), the data integration specification 706 may be considered as having its own models of the source and target, at a higher level than the metadata models comprising the layers 512, 514, 516, 520, 522, 524 to specifically referencing the subset of the source data 504 and target 508 relevant to the data integration specification 706. The references may be implemented for example, but not limited to, using pointers 910, 912, 914.

The data movement specification 710 is a specification, for example, in the form of an XML specification described by an XML schema, that describes how the data is extracted from different sources, transformed and loaded into a target application as per the target definition. Figure 10 shows a non-limiting example of a data movement specification 710 with a list for source data 1002, definition for target applications 1004; target data model 1005; query specification 712; lineage information 1006; and data transformations 1008. Examples of data transformations include, but are not limited to: data pivoting; aggregation including but not limited to: many to one, one to one, one to many, single parent, multiple parents; filtering; custom expressions; concatenations; merging of data streams from multiple data sources; lookups.

A data integration specification 706 may be a data source for another data integration specification. The data movement specification 710 may be viewed and edited in a data movement Ul with complete ETL capabilities.

A data integration module 804 provides flexible navigation of federated multi-dimensional and relational data sources. The data integration module may be member-based. The data integration module 804 uses intuitive business user queries and reports to define member-based specifications of the data to be integrated with target applications 410, and the member-based mapping of joins between data sources and target applications. The data integration module 804 also provides user interface for generating data movement specifications 710 to import data from source data 402 into target applications 410. The import process may be on a scheduled basis, using pre-defined templates and the data integration specifications 706. The data integration module 804 may also provide user interface for generating federated member-based metadata model 406 integrating reporting application 718, target applications 410 and source data 402.

The member-based data integration module 804 may further utilize and complement the following components: system metadata registry 416, to store specifications and application templates, report engine 806 to run and define queries, and the data movement engine 412 to run and define data movement task.

The system metadata registry 416 is a registry of the lineage information and the source metadata models and the target metadata models. In one embodiment of the present invention, the metadata models may be used by the reporting engine 806 to support authoring of business reports 808 by business users. The system metadata registry 416 may also stores the data integration specifications.

The model-based data movement engine 412 provides a data transformation engine for loading data from a vast array of data sources. The data movement service, for example, through an underlying data movement engine, 412 can target application staging tables, data management APIs or messaging queues or any other mechanism implemented in the data movement engine. The data movement engine 412 is driven by instructions stored in the data integration specification 706. The data movement service is meant to encapsulate any data movement engine available to the public.

The member-based data integration module 804 allows business users to define data integration relationships as member-based mappings. Through the use of a data integration specification 706 in terms of reports, queries, and members selections that can be used to generate federated member-based metadata models for reporting and data movement. Referring to Figure 5, there is shown an example of federated member-based metadata models. The federated member-based metadata model 406 is used to define the data models that business users author reports or queries against (by selecting members and measures, adding business filters,etc.). The federated member-based metadata model 406 supports the linking of federated member-based data sources into a single model that business users can write reports against.

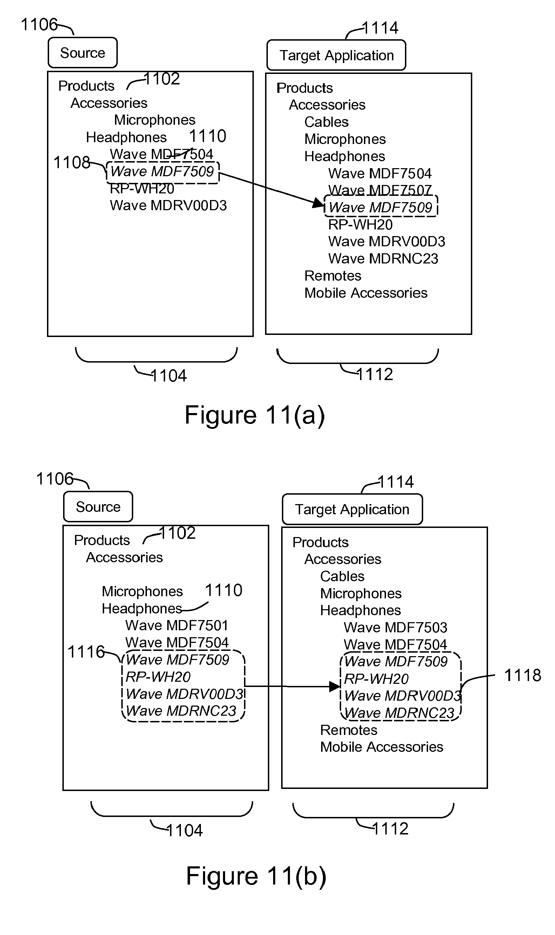

Figure 11 (a) shows a schematic interface for the data integration module 804 where the hierarchies of the product dimension 1102 are shown on the left panel 1104. The left panel includes the data source 1106. A member 1108 of the headphone level 1110 may be mapped to its corresponding member in the target application 1114 on the right panel 1112.

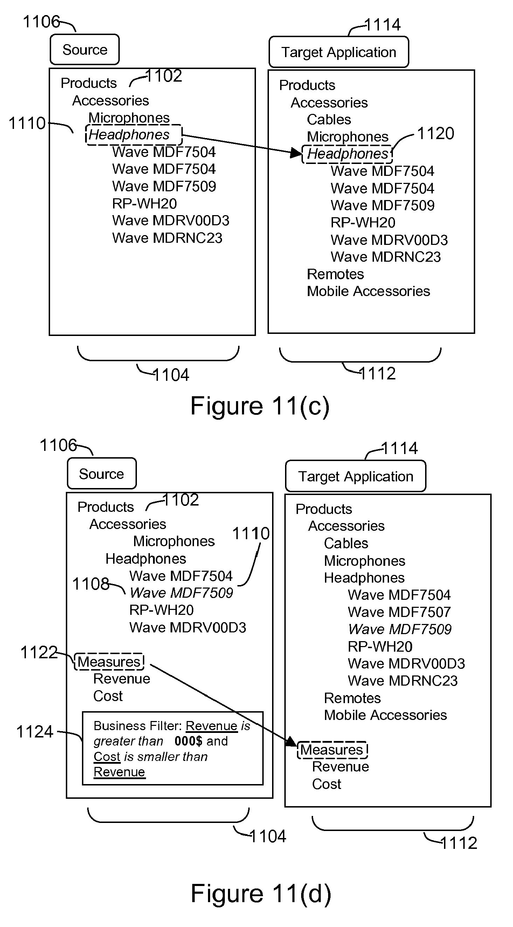

Referring to Figure 11 (b), multiple members 1116 may also be mapped to their corresponding members in the target application side 1118. Furthermore, referring to Figure 11 (c), it is also possible to map an ancestor with all descendents 1110, from the source data to the target application 1120. In every case the hierarchies and the relationships of the will be preserved in the new data structure in the target application. More complex mapping of members between source and target are also possible, the previous examples are intended for illustrative purpose only.

Referring to Figure 11 (d), tree items for measures 1122 which is at the same level as product, for example, revenue and cost, can added. A box with a business filter 1124 may also be present to filter out the items based on a criteria, for example, "revenue is greater than 1000$ and cost is smaller than revenue" as indicated.

The data integration module 804 may also include a core set of controls and interface components that can be packaged as libraries tailored to specialized user interface tools for specific applications that leveraged predefined templates. The specialized interfaces may be invoked from within target applications, for example, enterprise planning, consolidation, score carding and performance management, in the context of the application that is the focus of the data integration.

The present invention further allows users to name, categorize and characterize data integration specifications to promote reuse of existing links by other business users. Users will also be able to leverage existing data reports to help them define the data they need to move in their target application. Different mapping algorithms can be used to automate part or all of the data mapping task for the user.

A template library 810 may include predefined templates for target applications 410 such as planning, consolidation, score carding, performance management applications. The predefined templates include application-specific query specifications, data integration specifications, and predefined target data models. The templates are used by the member-based data integration module 804.

In a non-limiting example using a reporting application, the mappings between the source data 402 and target applications 410 through the federated member-based metadata model 406 can be used by the reporting engine 806 to report against the target applications 410 and then drill-through to the source data 402 to get more detailed and complete data.

In the non-limiting example using a reporting application, the reporting specification 812 is a specification, for example, a generic XML specification, that supports the definition of queries and reports in a reporting application. The queries and reports work against a plurality of source data 402 . The queries and reports can also link to data integration specification 706 and MDM systems 802. A reporting user interface 814 is used for defining reports 808 based on the federated member-based metadata model. These reports can be used as the source of the data integration module.

The Master Data Management (MDM) system 802 is a system where master copies of dimensions, hierarchies, levels, members and random attributes and data mappings are managed and synchronized with any number of source and target systems. In other words, the present invention may use the MDM system 802 as a source of dimensional mappings that it can reuse.

A workflow system 818 is used to manage events related to the overall system. The workflow system 818 can be used, for example, to trigger actions based on systems conditions, notify users of specific events.

Service Oriented Architecture (SOA) is an architecture based on Web Services and related standards to support enterprise-scalable applications and processes. The enterprise bus 820 provides a means where all components can interact through standardized SOAP messages regardless of their location and specific technology and features.

The data movement specification generator 708 is a lower-level component that accepts a generic and high level data integration specification 706 and transforms the data integration specification 706 into a data movement specification 710. The data movement specification generator 708 will target specific data movement engines 412. There may be a different data movement specification generator 708 for each different data movement engine 412 or one data movement specification generator 708 may be able to generate data movement specifications for several different engines. Other existing data movement engine may also be used as a data movement engine 412. The data movement specification generator 708 includes the logic that understands the detailed data movements steps required to enable the data movement engine 412 to move data in order to achieve the data sharing across source data 402 and target applications as defined by the user in the data integration module 804. The data movement specification generator 708 also creates the query specification 712 that will enable the extraction of data from multiple source data against the federated member-based metadata model 406.

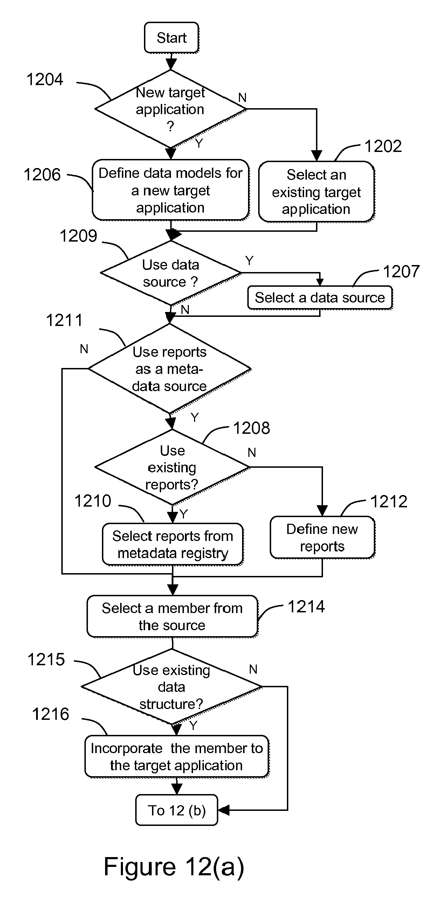

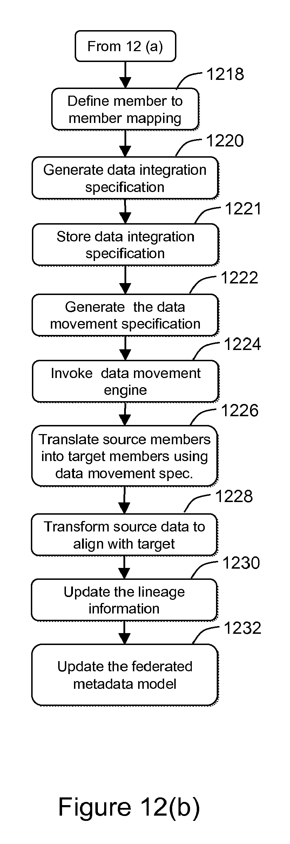

Referring to Figures 8, 12(a) and (b), the steps of a method for federated member-based specifications and data movement in accordance with one embodiment of the present invention is described.

At step 1202, an existing target application may be selected from the system metadata registry 416, or a data model may be defined 1206 using the data integration module 804 for a new target application 1204 optionally based on a target template from the template library 810.

One or more data sources 402 is selected 1207 if a data source is to be used 1209. Otherwise, reports are used as a metadata source 1211, existing reports are selected 1210 from the system metadata registry 416 and used to integrate data into the target application 410. Alternatively 1208, new target application reports can be defined 1212, for example in the case of a reporting application, using the reporting user interface 814 as a source for the data integration.

A user may pre-populate some of the required UI entries in the target application by choosing one of the existing templates in the template library 810.

To create new dimensions, hierarchies, levels or members in a target application , a member is selected 1214 from a source data 402, for example from a collapsible UI tree as shown in Figure 11, and then incorporated 1216 into a target application 410, for example by moving the member to the existing member tree structures of the target applications 410 if existing structure is used 1215. The target applications 410 or the MDM system 802 may also be the sources of data.

Referring to Figures 5, 11(a) and 12(b), to map new source data member 1108 to existing target data structures 1112, member-to-to-member mapping or join tables are defined 1218.

Also referring to Figure 11 (c), when the above described mappings are performed in bulk, for example, by selecting entire branches of member trees, the data integration module 804 supports different algorithms to infer mappings automatically. These include:
position-based mapping, identification key-based mapping, expression based mapping and name/description-based mapping. Identification key-based mapping and
name/description based mappings simply work on string matching between those source attributes and their target equivalent as per the target definition, where target attributes are defined. Position-based mapping consists of aligning source and target members based on their indexed position under a common parent. Expression based mapping is the same as identification based mapping except that the source key is composed of an expression rather than being a simple member.

Measures or fact tables are defined slightly differently from dimensions. Each measure can only be defined in terms of members from the same source. Data will be filtered by the members already defined for that source. For any advanced filtering or expression creations or simply reuse of query assets stored in existing reports, the user can introduce a business report 808 as a source of metadata.

Although the data integration module 804 is designed to minimize the technical work for the business user, advanced properties are always available for technical users to override the default behaviors. These advanced properties may include: the option to select member attributes on top of the default ones that will be carried through to the target.

The system 800 can be configured in such a way that data integration operations performed using the data integration module 804 also update the MDM system 3-22 with new members, or creation, modification, deletion of member attributes, before they are carried through to target applications 3-03. This ensures the integrity of the data that is manipulated throughout the system 800 and promotes reuse of work.

The previous steps may be captured 1220 in a data integration specification 706 which is then stored 1221 in the system metadata registry 416. This storage provides a central location, through the workflow system 818, to manage, reuse, schedule data integration specifications 706.

Having a central location for all the specifications also provides the opportunity to consolidate data integration specifications712 and data movement specifications 706 into more efficient ones, and sequence them in a way more appropriate to the operations.

The data integration specification 706 is passed to the data movement specification generator 708 to generate 1222 the data movement specification 710 required to extract the data from the sources. In a non-limiting example as illustrated in Figure 8, the queries 712 is also generated by the data movement specification generator 708.

The data movement specification 710 is processed 1224 by the data movement engine 3-14. The data movement engine 412 is specialized and understands multi-dimensional data and can deal with data at the member grain. The data movement engine 412 interprets the mappings and associations defined in the data movement specification 710 to translate the source members into target members 1228. The data movement engine 412 also transforms the data sets coming from the sources to align them to the input/staging structure expected by the target applications. The data movement engine 412 may be invoked remotely through the data movement service by any application as long as the data movement engine 412 receives a data movement specification 710.

Following the data movement is the preservation 1230 of target member lineage information 3-34. The lineage information 3-34 may also be managed by the MDM system 3-22 which holds all the master members and the metadata information that characterizes and organizes the master members. The metadata such as dimensions, hierarchies, levels and attributes are derived from the federated member-based metadata model 406. The lineage information 414 captures an absolute path from any target member to its original source member as well as any additional members mapped from other sources.

As illustrated in Figure 5, the lineage information 414 is bidirectional, thus provides the knowledge where target data is originated. This is beneficial and useful for business regulatory requirements. The bidirectional nature of the lineage Information 414 also allows the drill-through from target data to related detailed lower level or related source data.

Subsequently, following the MDM system 802 or target application 410 updates, the federated member-based metadata model 720 is updated 1232 using the new member information, including the metadata extracted from the source queries and associated lineage information 414 as well as any new dimensional structure created in the target application. As this updating process is repeated, additional and incremental information is added to the lineage information 414.

The system 800 may also refresh member and data values from the source data. These refreshes are run on a schedule defined in the workflow system 818. The workflow system 818 also notifies the user when data has been refreshed or if there has been any problem with the scheduled jobs.

An additional benefit of the exemplar system 800 is the ability for the user to generate ad hoc reports against a combination of the target applications 704, the MDM system 802 and the source data 402. The reports are created using the reporting user interface 814. The definition of the reports is stored in a report specification 812. The report specification 812 includes a query specification 816 that uses the same query language, therefor the query specification 712 used by the data movement engine can also be used to select the data for drill through reporting. The query specification 816 is used by the reporting engine 806 against the federated member-based metadata model 720 to extract data from source data. The reporting engine 806 then collates the data into a coherent layout structure by using the instructions contained in the report specification 812.

The data integration module 804 further allows the user to ask for drill-through reports to be created in the target applications 704. These are business reports that are automatically generated by the data movement engine 3-14, stored in system metadata registry 416 and used by the target applications 704 to display data from the data sources 402.

The described method and system enable business users to define and manage integration and synchronization of data into a consistent version of the truth using existing business data assets such as reports, master data, or data models to generate a data integration specification of the complex processing required that technical experts can understand and support.

Business users define simple member-based data mappings between sources and from sources to target applications. These mapping may be stored in a registry that permits reuse of the mappings in different data integration specifications. They are the basis for defining data movement tasks to populate target applications from data sources, as well as to define drill-through relationships that allow reporting and analysis from the target application back to data sources.

The data integration specification defines processes that can be executed and managed within the context of a Service Oriented Architecture in which a data movement service can consume that specification and execute the physical data movement from the data sources to the target applications. Within the same Service Oriented Architecture a data model service can consume the specification to create an integrated virtual model of the shared data sources to support drill-through reporting and analysis from target application back to data source.

The system uses a business user-friendly and intuitive process of member-based query definitions supported by multi-dimensional reporting and a data movement engine to enable flexible data movement into the target applications as well as integrated reporting and drill through across both target applications and data sources. The system unifies the specification and management of data relationships and movements across disparate data sources. The system allows business users to use intuitive business query tools, models and member-based editing of dimensions to define data integration in business terms, and generate precise technical specifications that can be executed automatically or refined and supported by technical users.

The system and method for federated member-based specifications and data integration of the present invention may be implemented by any hardware, software or a combination of hardware and software having the above described functions. The software code, instructions and/or statements, either in its entirety or a part thereof, may be stored in a computer readable memory. Further, a computer data signal representing the software code, instructions and/or statements may be embedded in a carrier wave and may be transmitted via a communication network. Such a computer readable memory and a computer data signal and/or its carrier are also within the scope of the present invention, as well as the hardware, software and the combination thereof.

While particular embodiments of the present invention have been shown and described, changes and modifications may be made to such embodiments without departing from the scope of the invention. For example, the elements of the data integration system are described separately, however, two or more elements may be provided as a single element, or one or more elements may be shared with other components in one or more computer systems.

## Claims

1. A method for integrating data between source data and a target application processing target data, the method comprising the steps of:
defining a data integration specification, the data integration specification including a lineage information linking a source dimensional member of the source data and a target dimensional member of the target data;
generating a data movement specification using the data integration specification, the data movement specification including the lineage information, a source reference to a source data model, a target reference to a target data model and a query specification for extracting source data for the target application; and
providing the source data to the target application using the data movement specification.

2. The method according to claim 1, wherein the lineage information is part of a federated member-based metadata model, the federated member-based metadata model including:
the source metadata model having a source data access layer including a source data access layer model objects, a source business layer including source business layer model objects; and a source package layer including source package layer model objects; and
the target metadata model having a target data access layer including a target data access layer model objects, a target business layer including target business layer model objects; and a target package layer including target package layer model objects;
further comprising the steps of:
defining a link connecting the source package layer and the target package layer; and
providing a mapping between the source dimensional member and the target dimensional member in the lineage information.

3. The method according to claim 1, further comprising the step of storing a metadata member in a system metadata registry, the metadata member being selected from the group consisting of the source metadata model, the target metadata model, the lineage information, the data integration specification, and a combination thereof.

4. The method according to claim 1, wherein the step of providing the source data further comprises the steps of invoking a data movement engine based on the data movement specification; and translating the source dimensional member into target dimensional member.

5. The method according to claim 1, wherein the source data comprising a plurality of data sources, and wherein the lineage information includes a plurality of mappings between the members of the plurality of data sources and the target data.

6. The method according to claim 1, further comprising a step selected from a group consisting of: selecting the source dimensional member in a user interface for moving to an existing data structure, mapping the selected source dimensional member to the existing data structure; defining new data models for a new application; selecting an existing target application; refreshing the member attributes of the source data; refreshing the values of the source data; defining a new report for mapping source data member and measure to the target application; defining a new report in the data integration module that is used to map members and measures to the target application; and transforming the source data to align with the target data.

7. The method according to claim 1, wherein the data integration specification further comprises a query specification specifying data being integrated from the source data, and a transformation for integrating the data into the target data.

8. A system for integrating data between a source data to a target data, the system comprising:
a data integration module defining a data integration specification, the data integration specification including a lineage information linking a source dimensional member of the source data and a target dimensional member of the target data;
a data movement specification generator generating a data movement specification using the data integration specification, the data movement specification including the lineage information, a source reference to a source data model, a target reference to a target data model and a query specification for extracting source data for the target application; and
a data movement service providing the source data to the target application using the data movement specification.

9. The system according to claim 8, further comprising:
a federated member-based metadata model, the federated member-based metadata model including:
the source metadata model having a source data access layer including a source data access layer model objects, a source business layer including source business layer model objects; and a source package layer including source package layer model objects;
the target metadata model having a target data access layer including a target data access layer model objects, a target business layer including target business layer model objects; and a target package layer including target package layer model objects;
the lineage information mapping the source dimensional member and the target dimensional member; and
a link connecting the source package layer and the target package layer.

10. A storage medium readable by a computer encoding a computer program for execution by the computer to carry out a method for integrating data between a source data and a target application processing target data, the computer program comprising:
code means for defining a data integration specification, the data integration specification including a lineage information linking a source dimensional member of the source data and a target dimensional member of the target data;
code means for generating a data movement specification using the data integration specification, the data movement specification including the lineage information, a source reference to a source data model, a target reference to a target data model and a query specification for extracting source data for the target application; and
code means for providing the source data to the target application using the data movement specification.

11. The storage medium of claim 10, wherein the lineage information is part of a federated member-based metadata model, the federated member-based metadata model including:
the source metadata model having a source data access layer including a source data access layer model objects, a source business layer including source business layer model objects; and a source package layer including source package layer model objects; and
the target metadata model having a target data access layer including a target data access layer model objects, a target business layer including target business layer model objects; and a target package layer including target package layer model objects;
further comprising:
code means for defining a link connecting the source package layer and the target package layer; and
code means for providing a mapping between the source dimensional member and the target dimensional member in the lineage information.
